Europäisches Patentamt

European Patent Office

Office européen des brevets

(11) Publication number : **0 480 709 A2**

# (12) EUROPEAN PATENT APPLICATION

(21) Application number : **91309290.4**

(22) Date of filing : **09.10.91**

(51) Int. Cl.⁵ : **G06K 11/18**

(30) Priority : **09.10.90 GB 9021876**

(43) Date of publication of application :
**15.04.92 Bulletin 92/16**

(84) Designated Contracting States :
**BE DE ES FR GB IT NL**

(71) Applicant : **RISMA LIMITED**
**Unit 27, Northfield Industrial Estate, Beresford Avenue**
**Wembley, Middx. HA0 1NU (GB)**

(72) Inventor : **Stead, Tony**
**4 Dennis Road**
**Cambridge Cambridgeshire, CB5 8TS (EN)**
Inventor : **Patel, Ashvin**
**3 Holland Road**
**Wembley Middlesex HA0 4RH (EN)**

(74) Representative : **Frankland, Nigel Howard**
**FORRESTER & BOEHMERT**
**Franz-Joseph-Strasse 38**
**W-8000 München 40 (DE)**

(54) **Control device for interactive computer game.**

(57)   A control device for an interactive computer game comprises a plurality of foot pedals (6, 22) and is designed to be connected to a manually operable control element such as a joystick (4) capable of effecting a plurality of control functions during playing of the interactive game and to a computer on which the game is played. The device incorporates a switching arrangement (25) which enables selection of which control functions are to be effected by way of the foot pedals (6, 22) and which are to be effected by the manually operable control element (4).

FIG. 5

EP 0 480 709 A2

THE PRESENT INVENTION relates to a control device and more particularly to a control device for use with an interactive computer game on a computer or games machine.

There are many type of interactive computer games on the market and new games are constantly being devised. In playing these games a player utilises a control device which may have a plurality of control functions in order to actively participate in the game. Commonly such control devices take the form of a joystick. A conventional joystick may have five control functions, e.g. four functions controlling movement of an item displayed on a screen as the game is being played, the four movement control functions representing movement up, down, to the left and to the right on the screen (or to the north, south, west or east). Diagonal movement is also possible, being a combination of vertical and horizontal movement. A fifth control function may be a "fire" function, that is to say the joystick is provided with a button which actuates a switch which simulates, for example, the firing of a weapon in the game.

A typical computer game may involve a player simulating flying a military aircraft, with a joystick being used to control movement of the aircraft in various directions on a computer screen and to fire a weapon carried upon the aircraft.

The joystick is connected to the computer upon which the game is played.

It has also been proposed to provide a control device for use with an interactive computer game where the device takes the form of a foot-operated pedal which is connected directly to the computer. This type of control device may be used, for example, to represent the accelerator pedal in a motor vehicle when playing a game which involves driving a motor vehicle.

The present invention seeks to provide a novel control device for use with an interactive computer game and a novel control arrangement for such a game.

According to one aspect of this invention there is provided a control device for an interactive computer game, the device comprising one or more foot pedals and means for connecting the or each pedal to a manually operable control element capable of effecting a plurality of control functions during playing of the interactive game, the control device further comprising means enabling the or each foot pedal to effect a selected one of said control functions.

In one embodiment the means enabling the or each foot pedal to effect a selected one of said control functions comprise a jack socket associated with each foot pedal and a plurality of jack plugs connected to the manually operable control element, there being one jack plug associated with each control function.

In a second embodiment the means enabling the or each foot pedal to effect a selected one of said control functions comprise a switching arrangement.

Preferably the switching arrangement comprises a multi-position switch associated with each control function, each position of each switch corresponding to one of said foot pedals or to the manually operable control element.

Conveniently the device incorporates means for connection to a further accessory for a computer game.

Advantageously the device comprises a plurality of foot pedals.

Preferably the control device has a housing, the housing being provided with a pair of foot rest flaps upon which part of an operator's foot rests when operating the foot pedals.

According to a second aspect of this invention there is provided a control arrangement for an interactive computer game, the arrangement comprising a control device having one or more foot pedals and a manually operable control element capable of effecting a plurality of control functions during playing of the interactive game, means connecting the or each foot pedal to the manually operable control element and further means for connecting the control arrangement to a computer, the control device incorporating means enabling the or each foot pedal to effect a selected one of said control functions.

The manually operable control element may comprise a joystick, a yoke, a steering wheel or a thumbpad.

Preferably when the control arrangement is connected to a computer by way of the further connecting means the control device is connected between the computer and the manually operable control element.

In order that the present invention may be more readily understood and so that further features thereof may be appreciated the invention will now be described by way of example, with reference to the accompanying drawings, in which:

FIGURE 1 is a schematic illustration of a control arrangement in accordance with one aspect of this invention;

FIGURE 2 is a schematic wiring diagram illustrating wiring connections for the control arrangement of Figure 1;

FIGURE 3 is a plan view of a foot pedal console constituting a control device in accordance with another aspect of this invention;

FIGURE 4 is an end view of the foot pedal console of Figure 2;

FIGURE 5 is a perspective view of a second embodiment of a control device in accordance with this invention; and

FIGURE 6 is a schematic wiring diagram for the control device of Figure 5.

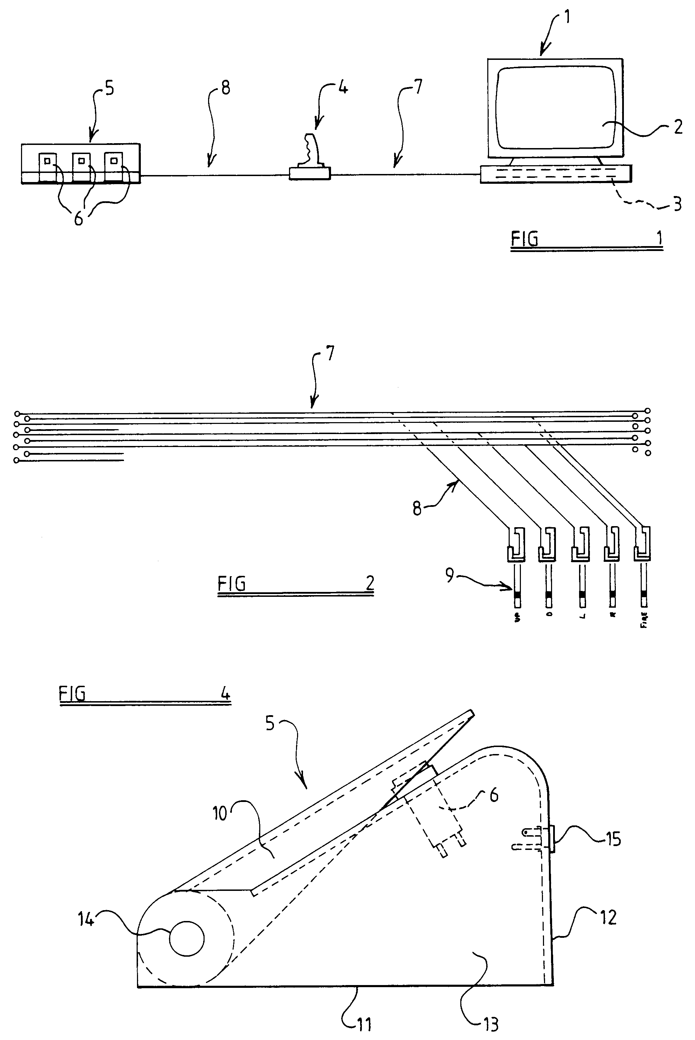

Referring to the accompanying drawings, Figure 1 illustrates a computer or electronic games machine 1 having a display screen 2 and a keyboard 3. The computer is intended to be used for, inter-alia, the playing of computer games. A control arrangement for use when playing an interactive computer game on the computer 1 comprises a manually operated control element in the form of a joystick 4 and, in addition to the joystick, a control device in the form of a foot pedal console 5 carrying three foot pedal-operated switches 6.

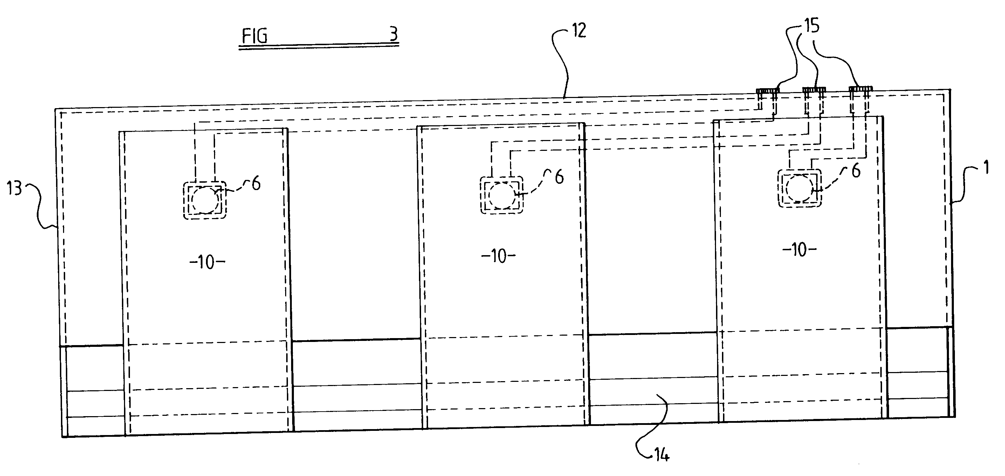

The computer 1 is connected to the joystick 4 by way of a hard wire connection 7 having, for example, a nine-pin connector at each end, there being a male connector for connection to the computer 1 and a female connector for connection to the joystick 4. A schematic illustration of the wiring arrangement is shown in Figure 2. Since the joystick 4 only has five control functions, some of the pins in the connectors at each end of the wire 7 are not utilised. The joystick 4 is connected to the foot pedal operated switches 6 by way of a splitter lead 8 from the wire connection 7, the splitter lead 8 being connected to five jack plugs 9 at its free end, there being one jack plug associated with each control function of the joystick 4. Thus, the jack plug 9 associated with upwards movement is connected to the line between the computer 1 and the joystick 4 which serves to effect upward movement, the jack plug 9 associated with downwards movement is connected to the line between the computer 1 and the joystick 4 which effects downward movement and so forth.

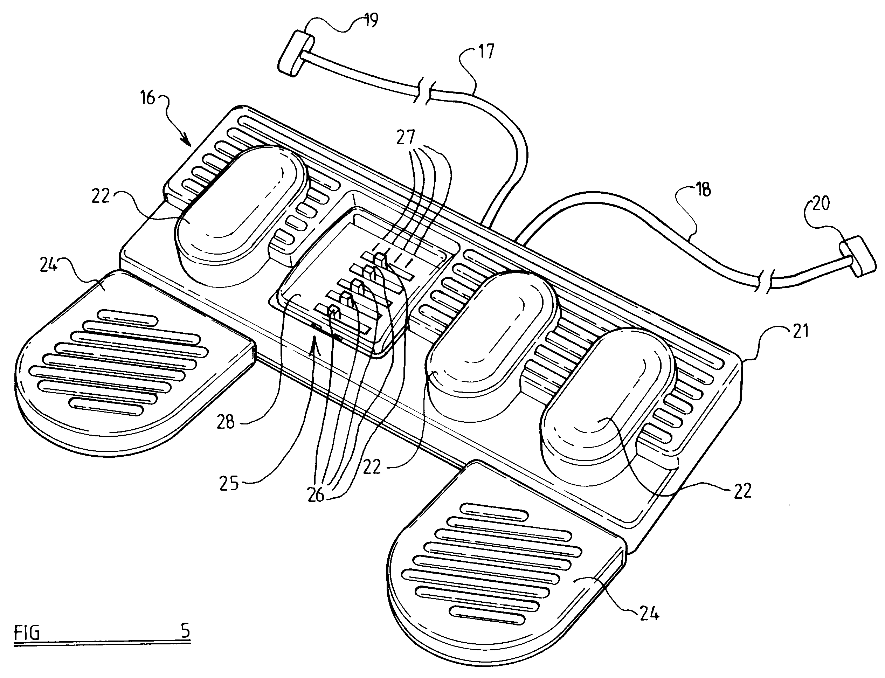

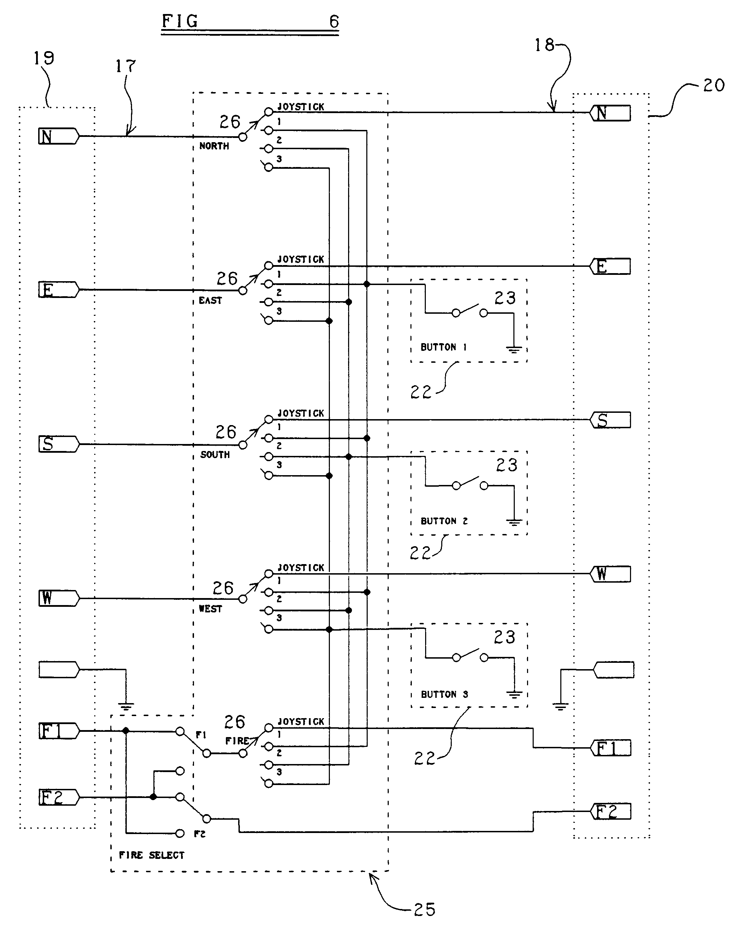

Figures 3 and 4 illustrate the foot pedal operated switches 6 in more detail. The console 5 constitutes a frame or housing upon which three pedals 10 are pivotally mounted, the pedals 10 serving to actuate the switches 6. The frame or housing 5 has a planar base 11 to enable it to stand on the floor and has an upwardly extending rear wall 12 which is bent over at its upper end and then extends downwardly at an angle towards the base 11, this downwardly inclined portion of the frame supporting the three switches 6 at spaced apart positions along the frame. The downwardly inclined portion of the frame terminates at a point spaced above the base 11 and spaced rearwardly of the front edge of the base. The frame has opposed, like end walls 13.

Adjacent the front edge of the frame at a position close to the base 11, a shaft 14 extends horizontally between, and is supported by, the end walls 13. Three foot pedals 10 are pivotally carried upon the shaft 14, there being one pedal positioned in alignment with each of the switches 6. The free end of each pedal rests upon a respective switch 6 so that pressure applied to the pedal by an operator's foot will close the switch. The switch is biassed to the open position, the bias being sufficient to support the pedal so that the switch will automatically return to the open position when the operator's foot is removed from the pedal. The pedal itself may be biassed upwardly by means of a return spring. Each switch 6 is connected to a jack socket 15 on the frame 5, as shown in dotted lines in Figure 3. The jack sockets 15 are each designed to receive one of the jack plugs 9 at the end of the splitter lead 8. Thus, each of the foot pedal operated switches 6 can be connected to any one of the five different jack leads 9 associated with each of the five different control functions. The jack plugs and jack sockets therefore constitute a selectable connection which enables the selection of the control function which is to be effected by each of the three pedal operated switches 6.

It will be appreciated from the above description that this invention provides a control arrangement for use with a computer-operated game, the control arrangement incorporating a joystick and a number of foot pedals with the operator being able to select which control functions are effected by the joystick and which are effected via the foot pedals. This arrangement would, for example, make it possible when playing a computer game which involves simulating the flying of an aircraft, to use the joystick for effecting upwards and downwards movement of the aircraft and for firing a weapon carried upon the aircraft and to use the foot pedals to effect sideways movement of the aircraft to the left and to the right in a manner which is very similar to that encountered in some real aircraft.

Thus, some of the functions normally effected by the joystick can be transferred to the foot pedals, as selected by the operator. The addition of the foot pedals also enables the number of functions to be increased. For example the joystick may have five functions, as explained above, and the foot pedals may effect three further functions, giving a total of eight possible control functions. Eight functions could be accommodated using nine-pin connectors to link the foot pedals the joystick and the computer.

Figure 5 shows a further design for a foot pedal console constituting a control device in accordance with this invention. The control device as a whole is designated 16 and is provided with two wires 17, 18, the free ends of which each carry a multi-pin connector 19, 20. One connector serves to connect the control device 16 to a computer or electronic games machine such as the computer 1 shown in Figure 1, whilst the other connector serves to connect the control device to a further control element for use in effecting control functions when playing a game on the computer, such a joystick. Thus, the control device 16 is connected between a computer and a control element for use when playing an interactive computer game.

The foot pedal console 16 comprises a main housing 21 which supports three foot-operated pedals or buttons 22, each of which serves to actuate an associated switch 23 (see Figure 6). The switches 23 are normally open switches which can be closed by applying pressure to the appropriate pedals 22. The housing 21 is designed to be located upon the floor so that the pedals 22 can readily be foot-operated. One edge of the housing 21 is provided with a pair of foot rest flaps 24, the flaps being hingedly connected to the edge of the housing 21 adjacent opposed ends thereof and being movable between an extended position (as shown in Figure 5) in which the heel of an operator's foot can rest upon the flap and a retracted position in which the flaps are folded beneath the main housing 21 in order to minimize the overall dimensions of the control device for the purposes of transportation of storage.

The control device is provided with a switching arrangement 25 which permits the operator to select which control functions are to be effected by way of the foot pedals 22 and which are to be effected by way of the further control element to which the device is connected, such as a joystick. In the embodiment described in Figures 5 and 6 five different control functions are possible corresponding to movement in four mutually perpendicular directions i.e. up, down, to the left and to the right or to the north, east, south and west and a 'fire' function in order to simulate the firing of a weapon in a computer game. The switching arrangement 25 includes five multi-position sliding switches 26, one switch corresponding to each different control function as identified by the letters NESW and F corresponding to north, east, south, west and fire. The switches 26 are supported within the main housing 21 and have a portion which projects out through the housing 21 and which enables the switches to be moved manually between four different positions 27. The four positions 27 are marked on the housing 21.

The four positions 27 between which each of the switches 26 may be moved correspond to the three control pedals 22 and the further control element such as a joystick to which the control device is connected. Thus, the switching arrangement not only enables selection of which control functions are to be effected by the control device 16 and which are to be effected by the joystick but also enables selection of which particular foot-operated pedals 22 are to effect each of the control functions which are to be effected by the control device 16.

In practice the foot pedals 22 will be identified by numbers and/or colours and the three positions 27 which correspond to the three foot pedals 22 will be correspondingly marked with an appropriate number and/or colour so that an operator can readily see which position of each switch 26 corresponds to the different foot pedals 22. The switching arrangement 25 is located beneath a transparent hinged cover 28 which is attached to the housing. The transparent cover 28 is movable between a raised position in which the switches 26 are accessible and a lowered or closed position (as shown in Figure 5) where it serves to prevent inadvertent movement of the switches 26 from their set positions.

Figure 6 is a schematic wiring diagram for the control device of Figure 5. The three foot pedals 22 are identified as button 1, button 2 and button 3 and the four positions 27 for each of the switches 26 are identified as joystick, 1, 2 and 3, these four positions corresponding to the further control element which, as mentioned, may be a joystick, and to the first, second and third foot pedals. In practice the connector 19 would connect the control device to the joystick whilst the connector 20 would connect the device to a computer. One pin in each of the connectors 19, 20 corresponds to each of the four directional control functions these being identified by the letters NESW for north, east, south and west in Figure 6. There are also ground connections in each of the connectors. In addition there are two fire control function pins in each connector and the switching arrangement has a fire select feature which permits selection of whether the two fire control functions can be effected through the joystick or other manually operable control element only or whether one fire control function is to be effected by the joystick and a second fire control function can be effected, selectively, by the joystick or one of the three foot pedals 22. An appropriate fire select switch would be provided on the control device 16 to permit this selection to be made.

It is to be appreciated that various modifications may be made to the above-described embodiment of this invention. Thus, any desired number of foot pedals and associated switches may be provided within the limitations of the control functions which can be effected. Indeed, the term pedal is to be understood to cover any type of foot-operated control device. Thus, the pedals may simply consist of foot-operated, button-type switches which are actuated directly, without any pivotally mounted foot plates or cover being provided.

The manually operable control element need not comprise a joystick but may take the form of a yoke or steering wheel or even a thumb-pad. The connection between the different control devices and the computer 1 need not consist of a hard wire, but may, for example, be an optical connection such as an infra-red link or an acoustic or radio link.

The foot pedal console may include a further connection enabling a further accessory to the connected thereto. Thus, for example, the invention may include a joystick, a set of foot pedals and a further accessory such as a throttle control, gear control or a read-out instrument or the like. Thus, it will be appreciated that various modifications may be made to the described embodiment of this invention without departing from the scope of the invention.

## Claims

1. A control device for an interactive computer game, the device comprising one or more foot pedals (6, 22) and means (8, 18) for connecting the or each pedal (6, 22) to a manually operable control element (4) capable of effecting a plurality of control functions during playing of the interactive game, the control device further comprising means (9, 15, 25) enabling the or each foot pedal (6, 22) to effect a selected one of said control functions.

2. A control device according to Claim 1 wherein the means enabling the or each foot pedal to effect a selected one of said control functions comprise a jack socket (15) associated with each foot pedal and a plurality of jack plugs (9) connected to the manually operable control element (4), there being one jack plug associated with each control function.

3. A control device according to Claim 1 wherein the means enabling the or each foot pedal to effect a selected one of said control functions comprise a switching arrangement (25).

4. A control device according to Claim 3 wherein the switching arrangement (25) comprises a multi-position switch (26) associated with each control function, each position (27) of each switch (26) corresponding to one of said foot pedals (6, 22) or to the manually operable control element (4).

5. A control device according to any one of Claims 1 to 4 wherein the device incorporates means for connection to a further accessory for a computer game.

6. A control device according to any one of Claims 1 to 5 wherein the device comprises a plurality of foot pedals (6, 22).

7. A control device according to any one Claims 1 to 6 wherein the control device has a housing (21), the housing (21) being provided with a pair of foot rest flaps (24) upon which part of an operator's foot rests when operating the foot pedals (6, 22).

8. A control arrangement for an interactive computer game, the arrangement comprising a control device (5, 16) having one or more foot pedals (6, 22) and a manually operable control element (4) capable of effecting a plurality of control functions during playing of the interactive game, means (8, 18) connecting the or each foot pedal (6, 22) to the manually operable control element (4) and further means (7, 17) for connecting the control arrangement to a computer, the control device (5, 16) incorporating means (9, 15, 25) enabling the or each foot pedal (6, 22) to effect a selected one of said control functions.

9. A control arrangement according to Claim 8 wherein the manually operable control element comprises a joystick, a yoke, a steering wheel or a thumb-pad.

10. A control arrangement according to Claim 8 or Claim 9 wherein, when the control arrangement is connected to a computer by way of the further connecting means (7, 17), the control device (5, 16) is connected between the computer and the manually operable control element (4).

FIG _____ 1

FIG _____ 2

FIG _____ 4

FIG 3

EP 0 480 709 A2

FIG 5

# FIG 6